# FASCICULE DE BREVET EUROPEEN

(11) **EP 0 622 749 B1**
(45) Date de publication et mention de la délivrance du brevet: **18.11.1998**
(21) Numéro de dépôt: 94460012.1
(22) Date de dépôt: 28.04.1994
(51) Int. Cl.: G06F 15/80

(54) **Système à réseau neuronal pour le traitement de signaux**
Neuronales Netzwerk für Signalverarbeitung
Neural network system for signal processing

(30) Priorité: 29.04.1993 FR 9305266
(43) Date de publication de la demande: 02.11.1994
(73) Titulaire: FRANCE TELECOM, 75015 Paris (FR); TELEDIFFUSION DE FRANCE, 75015 Paris (FR)
(72) Inventeur: Leray, Pascal, F-35590 Saint-Gilles (FR); Burnod, Yves, F-94110 Arcueil (FR)
(74) Mandataire: Fournier, Michel Robert Marie

(56) Documents cités:
- US-A- 4 858 177
- US-A- 5 204 938
- COMPEURO 91, 13 Mai 1991, BOLOGNA , ITALY pages 331 - 335 TRELEAVEN 'Towards a general-purpose neurocomputing system'
- IEEE 1991 NATIONAL AEROSPACE AND ELECTRONICS CONFERENCE NAECON 1991, vol.2, 20 Mai 1991, DAYTON , USA pages 736 - 742 WOJCIECHOWSKI 'SNAP : a parallel processor for implementing real time neural networks'
- 1992 IEEE INTERNATIONAL CONFERENCE ON SYSTEMS, MAN, AND CYBERNETICS, vol.1, 18 Octobre 1992, CHICAGO , USA pages 13 - 18 JUMP 'A massively parallel, multiple-SIMD architecture for implementing artificial neural networks'

## Description

L'invention concerne un système de traitement de signaux utilisant un réseau d'opérateurs neuronaux.

De tels systèmes trouvent actuellement de plus en plus d'applications dans l'ensemble du domaine du traitement de l'information. Ils sont particulièrement bien adaptés pour résoudre des problèmes pour lesquels l'informatique classique est mal adaptée. Comme domaines d'application, on peut citer par exemple la robotique, le pilotage automatique, la recherche moléculaire, la numérisation automatique d'objets, l'analyse et la synthèse sonore.

Un domaine d'application particulièrement prometteur pour ce type de système est celui du traitement des images : analyse d'images pour la reconnaissance de formes ou d'objets, codage et décodage d'images en vue de réaliser une compression d'images par exemple pour un système de télévision.

A la suite de nombreuses modélisations mathématiques sont apparues quelques réalisations câblées de réseaux neuronaux prévus pour être adaptés à plusieurs applications. On peut citer le "perceptron" qui est constitué d'un ensemble d'unités de traitement, appelés opérateurs neuronaux, disposés en plusieurs couches interconnectées. Les données à traiter sont appliquées à l'entrée de la première couche et le traitement s'effectue à travers les couches successives, le résultat étant affiché en sortie des opérateurs de la dernière couche.

La fonction réalisée par un tel réseau est déterminée par le poids des interconnexions reliant les sorties des opérateurs neuronaux d'une couche aux entrées de ceux de la couche suivante. Ces poids, appelés "poids synaptiques" par analogie avec la biologie, sont modifiables par un mécanisme d'apprentissage défini par un algorithme. Cet algorithme suit par exemple la règle dite de HEBB, l'apprentissage pouvant être supervisé ou non. Comme autre règle d'apprentissage, on peut citer également la "propagation rétrograde" ou la "rétropropagation du gradient".

Les opérateurs neuronaux peuvent être de type analogique ou numérique et réalisent des opérations relativement simples. Ainsi, les opérateurs analogiques ou numériques sont prévus pour effectuer des fonctions multilinéaires, c'est-à-dire des sommes de produits et éventuellement des opérations de seuillage. Pour les opérateurs binaires, les fonctions reviennent à de simples opérations logiques. En considérant l'ensemble des signaux d'entrée d'un opérateur et l'ensemble de ses poids synaptiques comme un vecteur d'activités d'entrée et un vecteur de coefficients, l'opération de base se ramène par exemple à un produit scalaire de ces deux vecteurs. Le signal de sortie fourni par l'opérateur définit son activité qui peut être interprétée comme une mesure de la conformité des signaux reçus à un état de référence défini après apprentissage par le vecteur de coefficients.

Dans le cadre d'une réalisation matérielle à base de composants électroniques, il est clair que le nombre de connexions d'entrée d'un opérateur est nécessairement limité. Il en résulte une limitation du nombre d'opérateurs susceptibles d'influencer un autre opérateur donné. Or, dans les réseaux connus jusqu'à présent, les interconnexions possibles entre opérateurs sont prédéfinis en fonction de l'application considérée. Il en résulte un manque de souplesse dans la configuration du réseau aussi bien à l'initialisation qu'au cours de son fonctionnement.

L'invention a pour but de remédier à l'inconvénient précédent, en proposant un système permettant une reconfiguration dynamique des connexions entre les opérateurs du réseau.

Plus précisément, l'invention a pour objet un système de traitement de signaux comme décrit dans la revendication 1.

Grâce au mécanisme d'adressage mentionné, il est donc possible de modifier facilement (par logiciel) les interconnexions entre opérateurs aussi bien à l'initialisation du système pour l'adapter à des applications différentes qu'en cours de traitement pour modifier dynamiquement la configuration du système. Cette modification peut s'effectuer par un simple changement des valeurs des adresses d'activités.

Pour faciliter les opérations d'adressage et pour permettre des opérations en parallèle, l'invention prévoit selon une autre caractéristique que le réseau est organisé en plusieurs niveaux, chaque niveau comportant un groupe d'opérateurs, au moins un module de mémoire affecté aux espaces mémoires des opérateurs dudit groupe et au moins un premier bus de communication reliant lesdits opérateurs audit module de mémoire, ledit réseau comprenant des liaisons permettant la communication entre l'unité de contrôle et chacun desdits premiers bus de communication.

Toujours pour augmenter le parallélisme et selon un autre aspect de l'invention, chaque niveau comprend des moyens d'adressage capables d'adresser les activités des opérateurs des autres niveaux après lecture des adresses d'activité contenues dans le module mémoire dudit niveau.

Selon un aspect particulier de réalisation, la fonction multilinéaire est le produit scalaire dudit vecteur d'entrée, soit par un vecteur de coefficients associé audit opérateur, soit par un autre vecteur d'entrée.

Une propriété importante des réseaux neuronaux est qu'ils peuvent effectuer des traitements différents sur les mêmes signaux d'entrée et établir des corrélations entre ces traitements différents. Aussi, pour bénéficier de cette possibilité, l'invention prévoit en outre que les opérateurs dudit sous-ensemble et appartenant au même niveau sont reliés entre eux. D'autre part, chacun desdits opérateurs prévus pour effectuer le produit scalaire d'un vecteur d'entrée par un vecteur de coefficients comporte des moyens d'apprentissage pour corriger ledit vecteur de coefficients en fonction de son vecteur d'entrée et des activités des autres opérateurs du même niveau.

D'autres aspects et détails de réalisation du système selon l'invention apparaîtront dans la suite de la description.

Le système qui vient d'être défini peut trouver de nombreuses applications, en particulier pour effectuer des traitements d'images. Aussi, l'invention concerne également un système d'analyse d'images utilisant ce système.

Selon cette application, les signaux d'entrée du système sont des signaux représentatifs d'une image appliqués à l'entrée des opérateurs du premier niveau, les opérateurs du second niveau étant associés à des espaces mémoire contenant les adresses d'activités d'opérateurs du premier niveau. D'autre part, l'unité de contrôle active les différents niveaux successivement dans l'ordre croissant des niveaux,
lesdits moyens d'apprentissage étant activés au cours d'un processus d'apprentissage précédant une analyse dont le résultat est représentable par les valeurs des coefficients des opérateurs de l'un quelconque des niveaux supérieurs à un.

Comme nous le verrons en détail ultérieurement, l'adressage relatif des activités d'entrée d'un opérateur associé à l'organisation en plusieurs niveaux du réseau permet d'effectuer des opérations d'analyse d'images animées en vue d'identifier des formes homogènes puis des objets, indépendamment de leurs positions et de leurs mouvements relatifs.

Ce système d'analyse d'images sera avantageusement utilisé pendant une phase d'apprentissage en vue de réaliser un système de synthèse d'images. Le même système pourra également intégrer un système d'analyse et de synthèse du son associé aux images.

Les aspects intéressants concernant l'application du système au traitement des images seront exposés plus en détails dans la suite de la description en référence aux figures.
- La Figure 1 est une représentation d'ensemble d'une réalisation particulière du système selon l'invention.
- La Figure 2 est une représentation schématique de l'organisation des opérateurs du réseau selon l'invention.
- La Figure 3 représente un mode de réalisation d'un niveau du réseau selon l'invention.
- La Figure 4 est un schéma expliquant le mécanisme d'adressage dans l'invention.
- La Figure 5 est une représentation fonctionnelle d'un opérateur du réseau.
- Les Figures 6 et 7 représentent des modes de réalisation de processeurs d'entrée et de sortie constituant un opérateur du réseau.

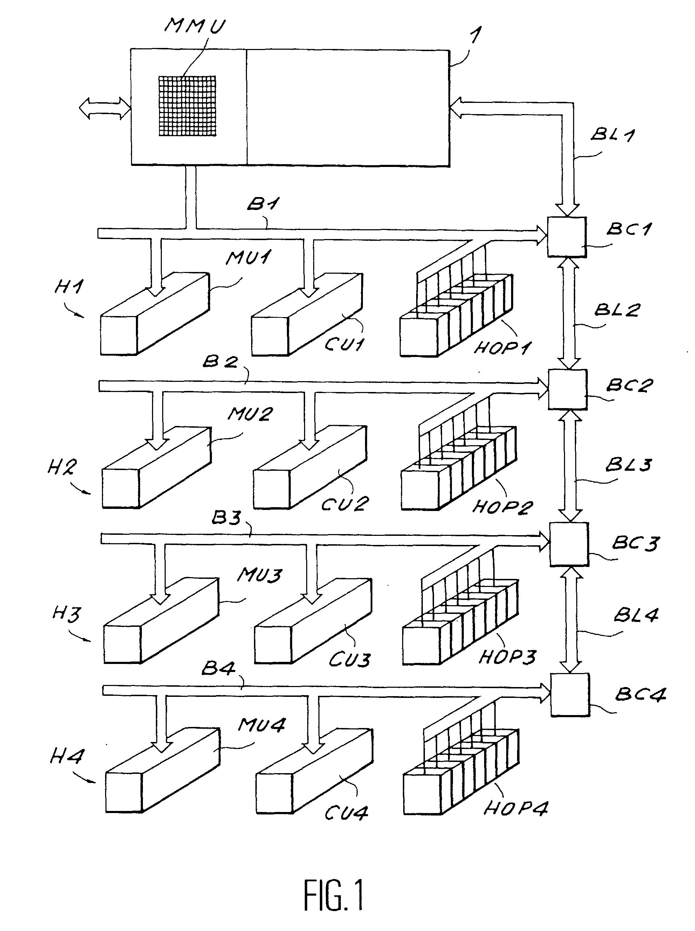

Le système représenté à titre d'exemple à la figure 1 est composé d'un réseau d'opérateurs neuronaux H1 à H4 coopérant avec une unité de contrôle 1 jouant le rôle de superviseur. Cette unité 1 ainsi que le premier niveau H1 du réseau communiquent avec une mémoire MMU dans laquelle sont mémorisés les signaux à traiter, par exemple les pixels d'une image. Chaque niveau H1 à H4 est organisé autour d'un bus B1 à B4 et comporte un ensemble d'opérateurs HOP1 à HOP4, un module de mémoire MU1 à MU4 et un circuit de contrôle CU1 à CU4 reliés chacun aux bus B1 à B4 du niveau correspondant.

Les bus B1 à B4 peuvent être mis en communication entre eux et avec l'unité de contrôle 1 par l'intermédiaire de liaisons BL1 à BL4 et de contrôleurs de bus BC1 à BC4.

Cette organisation réalise donc une répartition de la mémoire de traitement par niveaux, ce qui permet une délocalisation de certaines opérations impliquant des accès mémoire pour chaque niveau considéré.

Compte tenu de la structure qui a été choisie, le réseau est commandé de façon à activer successivement les opérateurs des différents niveaux par ordre croissant des niveaux et, pour un niveau actif, à activer successivement dans un ordre donné les différents opérateurs de ce niveau.

Bien entendu, l'invention pourrait être mise en oeuvre par d'autres structures utilisant d'autres systèmes d'interconnexions physiques entre les opérateurs, notamment ceux qui permettraient un fonctionnement asynchrone et en parallèle d'au moins une partie des opérateurs du réseau.

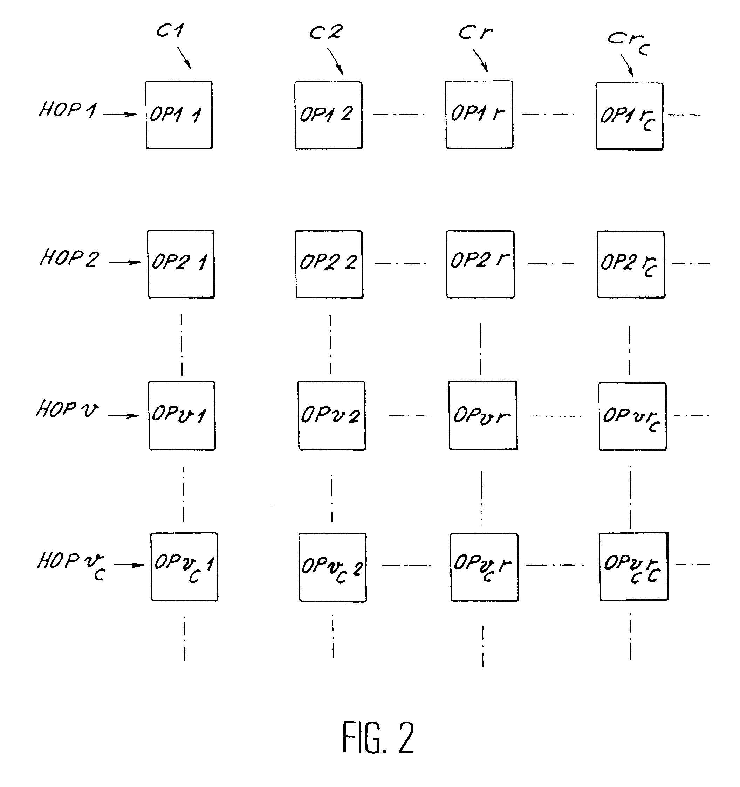

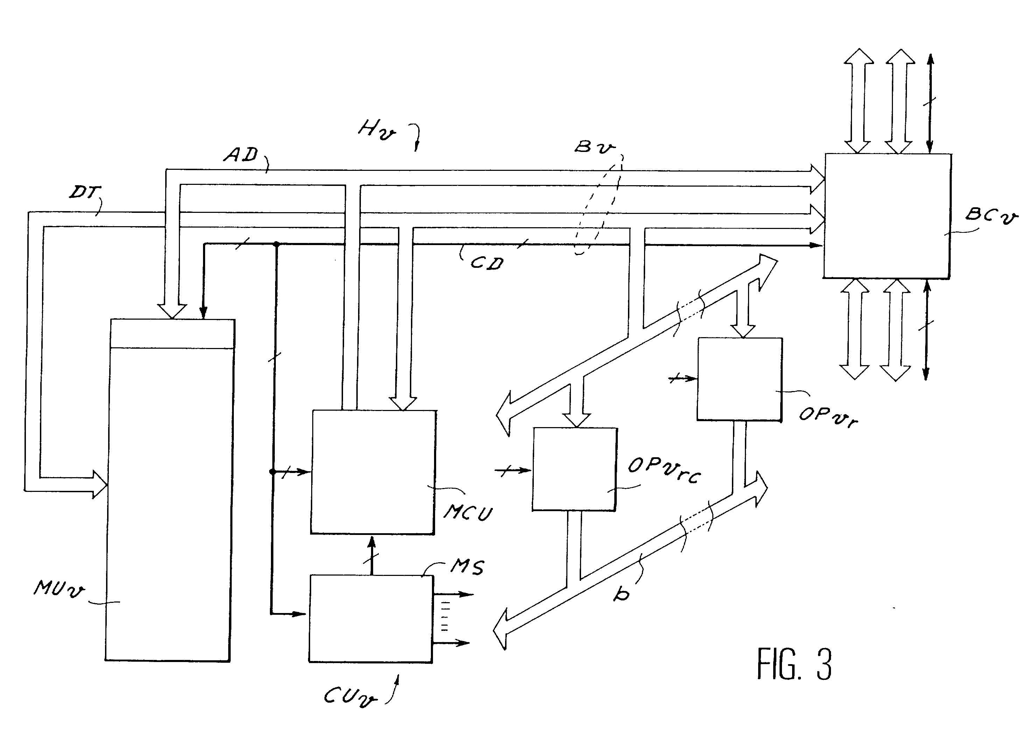

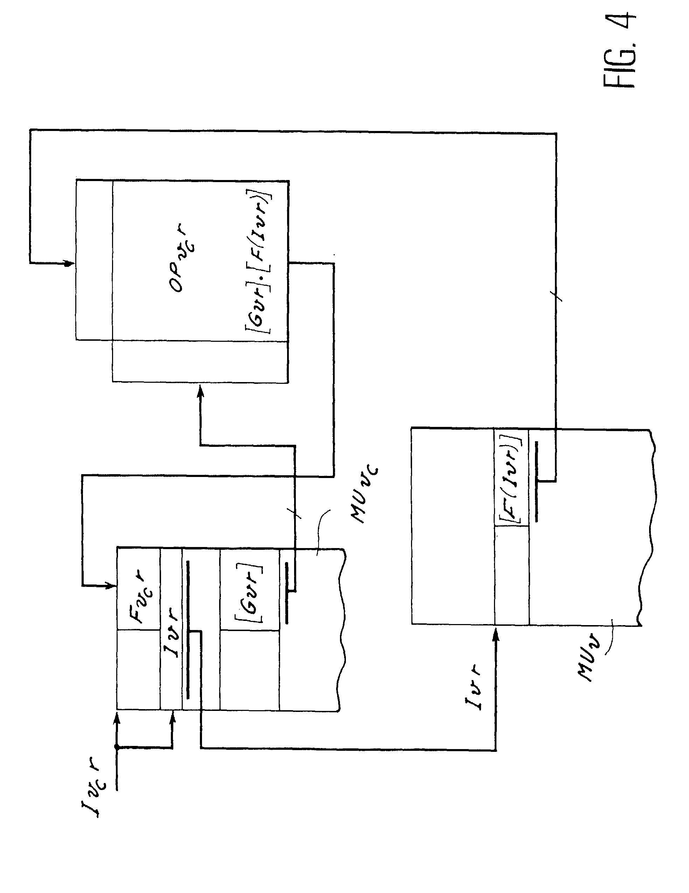

Des explications plus précises concernant le fonctionnement du système seront données en particulier en référence aux figures 3 et 4. Il convient auparavant d'indiquer les conventions de notations qui seront utilisées par la suite. Pour cela, nous pouvons nous reporter à la figure 2 qui représente schématiquement l'organisation des opérateurs du réseau.

Selon cette convention, chaque niveau est repéré par un indice v, un niveau considéré en particulier étant repéré par l'indice v_{c}. De façon analogue, les différents opérateurs d'un même niveau sont repérés par un indice de couche r, la couche d'un opérateur particulier étant repérée par l'indice r_{c}. Ainsi, un opérateur appartenant au niveau v et à la couche r sera référencé par OPvr, un opérateur considéré en particulier sera référencé par OPv_{c}r_{c} et un opérateur quelconque d'un niveau particulier v_{c} sera référencé par OPv_{c}r.

La figure 3 représente un exemple de réalisation des éléments constitutifs d'un des niveaux Hv du réseau. Nous retrouvons le bus Bv constitué de lignes de données DT, d'adresses AD et de commandes CD permettant la communication entre les unités de ce niveau avec celles des autres niveaux et avec l'unité de contrôle 1. Les opérateurs OPvr_{c}, ..., OPvr sont reliés chacun aux lignes de données DT. Ils sont d'autre part reliés entre eux par une seconde liaison b pouvant être également un bus de communication. Le circuit de contrôle CUv est essentiellement composé d'un contrôleur de mémoire MCU et d'un séquenceur MS avantageusement microprogrammable. Le séquenceur MS reçoit des signaux d'initialisation et de commande, tels que des signaux d'horloge, par l'intermédiaire des lignes de commande CD et il fournit à son tour les signaux commandant le contrôleur de mémoire MCU et les opérateurs OPvr. Le contrôleur de mémoire MCU est relié en entrée aux lignes de données DT et en sortie aux lignes d'adresses AD. Il est également relié aux lignes de commande CD en vue de transmettre des signaux de commande de lecture ou d'écriture et d'échanger des signaux de requête et d'acquittement avec le contrôleur de bus BCv lors des opérations d'adressage.

Grâce à cette disposition, le contrôleur de mémoire est en mesure d'adresser un module de mémoire du même niveau ou d'un autre niveau. Il peut d'autre part lire une adresse dans le module de mémoire associé MUv et la placer sur les lignes d'adresses AD pour accéder aux données contenues dans des modules de mémoire d'autres niveaux.

Cette réalisation permet la mise en oeuvre d'un mécanisme d'indirection essentiel à l'invention. Ce mécanisme est expliqué schématiquement à la figure 4. Sur cette figure, nous considérons l'opérateur OPvcr du niveau vc et de la couche r. Cet opérateur est associé à un espace mémoire du module MUvc qui contient notamment un vecteur de coefficients [Gvr], au moins une adresse Ivr ainsi que la dernière valeur calculée de l'activité Fvcr de l'opérateur. Une adresse Ivr définit un emplacement mémoire d'un module de mémoire d'un autre niveau, par exemple v, contenant une composante d'un vecteur d'activités [F(Ivr)] qui est une valeur d'activité d'opérateur du niveau v et de couche r.

Ainsi, conformément à l'invention, le calcul de l'activité de sortie de l'opérateur OPvcr s'effectue d'abord par un adressage du module MUvc pour rechercher les adresses Ivr. Ces adresses permettent d'accéder au vecteur d'activités [F(Ivr)] résultant de calculs effectués par des opérateurs du niveau v. Ce vecteur d'activités ainsi que le vecteur de coefficients [Gvr] sont ensuite appliqués aux entrées de l'opérateur OPvcr. L'opérateur effectue alors le produit scalaire de ces deux vecteurs et le résultat obtenu Fvcr est enfin chargé dans le module MUvc.

On pourra vérifier que ces opérations peuvent être exécutées grâce aux moyens décrits à la figure 3, en prévoyant bien entendu un séquencement approprié des commandes.

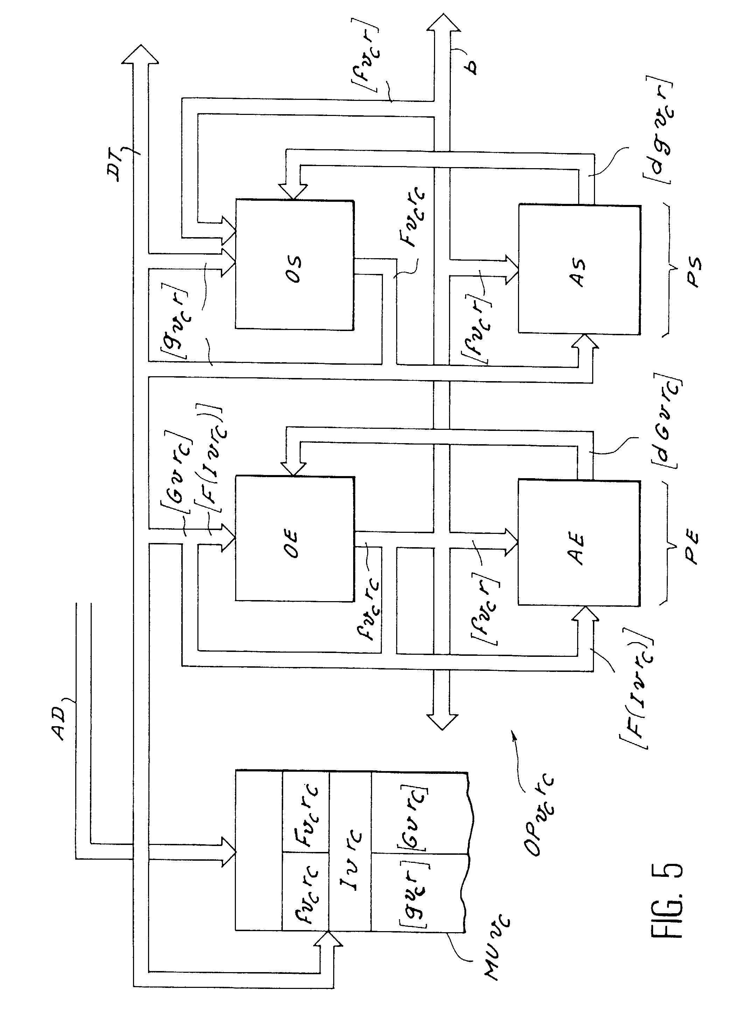

La figure 5 est une représentation fonctionnelle d'un opérateur muni de moyens d'apprentissage et capable de communiquer par le bus b avec d'autres opérateurs du même niveau. Pour faciliter les explications, nous supposons qu'il s'agit de l'opérateur OPvcrc du niveau vc et de couche rc. L'opérateur est constitué d'un processeur d'entrée PE et d'un processeur de sortie PS. Le processeur d'entrée PE est composé de deux modules fonctionnels appelés opérateur d'entrée OE et module d'apprentissage d'entrée AE affectés respectivement aux calculs de l'activité et à la fonction d'apprentissage par modification des coefficients. De la même façon, le processeur de sortie PS est constitué des modules fonctionnels correspondants : un opérateur de sortie OS et un module d'apprentissage de sortie AS.

L'opérateur d'entrée OE est relié en entrée aux lignes de données DT de façon à pouvoir charger le vecteur de coefficient [Gvrc] contenu dans le module MUvc ainsi que le vecteur d'activité [F(Ivrc)] correspondant aux adresses Ivrc contenu dans le module MUvc. L'opérateur d'entrée OE calcule alors l'activité fvcrc et cette activité est transmise aux lignes de données DT en vue d'un chargement dans le module MUvc. Elle est transmise d'autre part au bus b à destination du module d'apprentissage AE et des autres opérateurs du même niveau vc.

L'opérateur de sortie OS du processeur de sortie PS est relié en entrée aux lignes de données DT de façon à pouvoir charger son vecteur de coefficients [gvcr]. Une autre de ses entrées est reliée au bus b de façon à recevoir un second vecteur d'activité [fvcr] constitué de l'ensemble des activités des opérateurs d'entrée OE du même niveau vc. L'activité Fvcrc calculée par l'opérateur de sortie OS est transmise aux lignes de données DT en vue d'un chargement dans le module MUvc ainsi qu'au module d'apprentissage AS associé.

Le module d'apprentissage AE du processeur d'entrée PE est relié en entrée au bus b pour recevoir le second vecteur d'activité [fvcr]. Il reçoit d'autre part le vecteur d'activité [F(Ivrc)]. En fonction de ces deux vecteurs d'entrée, le module AE calcule la correction [dGvrc] du vecteur de coefficient [Gvrc].

Le module d'apprentissage de sortie AS reçoit le vecteur de coefficient [gv_{c}r] de l'opérateur de sortie OS ainsi que le second vecteur d'activité [fv_{c}r] et fournit la correction [dgv_{c}r] du vecteur de coefficient [gv_{c}r].

Il convient de noter que cette représentation est purement fonctionnelle et que le découpage des processeurs d'entrée et de sortie en opérateurs et modules d'apprentissage ne correspondra pas nécessairement à un découpage physique de circuit d'une réalisation pratique. Néanmoins, cette représentation va nous permettre d'expliquer plus simplement le fonctionnement détaillé de l'opérateur.

Rappelons tout d'abord que l'activation d'un niveau donné v_{c} consiste à activer successivement dans un ordre déterminé chacun des opérateurs OPv_{c}r du niveau. Lorsque l'opérateur OPv_{c}r_{c} est activé, le contrôleur de mémoire MCU place à l'entrée de l'opérateur d'entrée OE actif le premier vecteur d'activité [F(Ivr_{c})]. Le vecteur de coefficient [Gvr_{c}] étant supposé préchargé, l'opérateur OE calcule l'activité fv_{c}r_{c} qui est la composante correspondante du second vecteur d'activité [fv_{c}], et la transmet au bus b. Les opérateurs de sortie et les modules d'apprentissage de chacun des opérateurs du niveau chargent cette valeur. Lorsque tous les opérateurs d'entrée du niveau ont été ainsi successivement activés, le second vecteur d'activité [fv_{c}r] est complètement défini et les opérateurs de sortie des opérateurs du niveau v_{c} calculent les activités Fv_{c}r puis les modules d'apprentissage AS calculent les valeurs de correction [dgv_{c}r] des vecteurs de coefficients des opérateurs de sortie associés.

A titre d'illustration, nous pouvons indiquer deux exemples de règles d'apprentissage applicables respectivement aux processeurs d'entrée et de sortie. Pour le processeur d'entrée PE, l'apprentissage consiste à provoquer une correction du vecteur de coefficient [Gvr_{c}] lorsque l'activité Fv_{c}r d'au moins un processeur de sortie PS du même niveau dépasse un seuil déterminé. La correction est alors proportionnelle au vecteur d'activité [F(Ivr_{c})]. L'apprentissage du processeur de sortie consiste pour chaque composante d'activité fv_{c}r du second vecteur d'activité [fv_{c}r] à définir une composante du vecteur de coefficient comme la probabilité conditionnelle pour que la composante d'activité fv_{c}r et l'activité Fv_{c}r_{c} du processeur de sortie dépassent simultanément chacune un seuil prédéterminé. Bien entendu, d'autres règles d'apprentissage pourront être choisies selon l'application, notamment pour ajuster le type de corrélation souhaitée entre les opérateurs d'un même niveau.

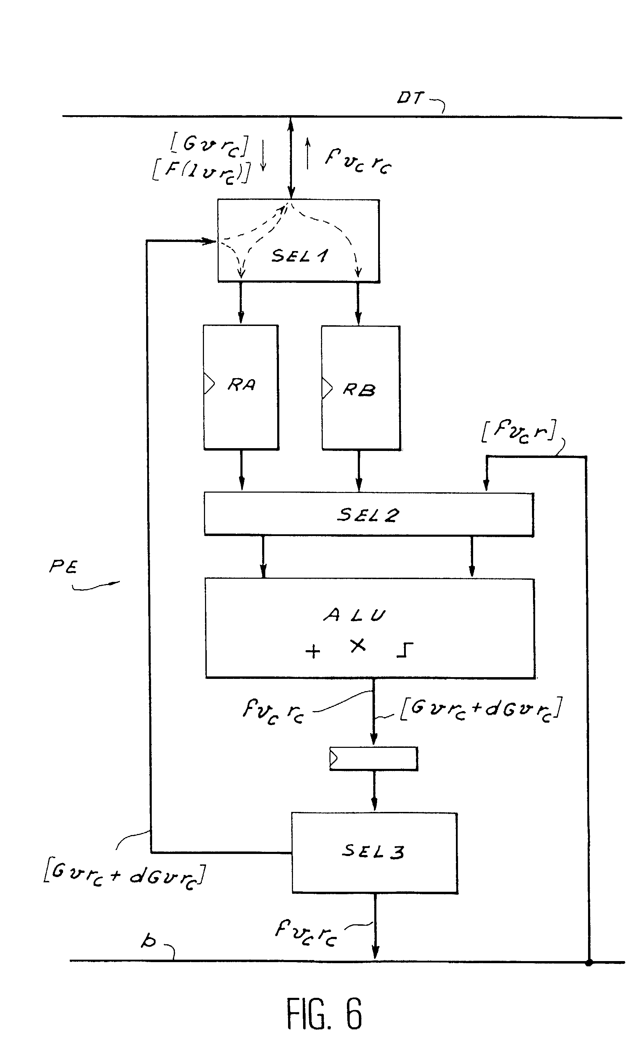

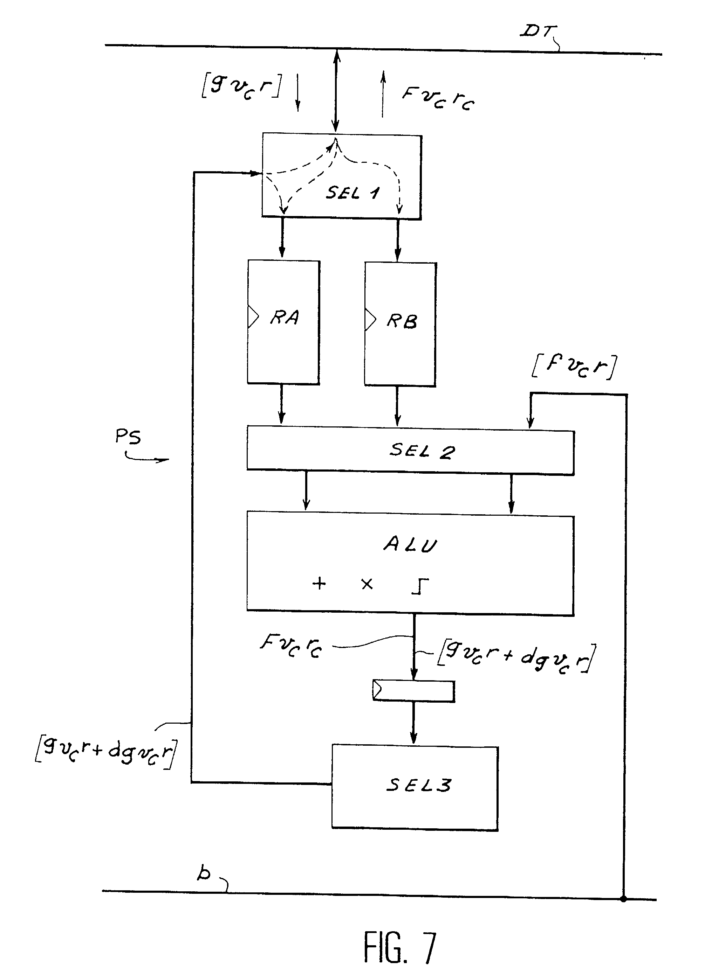

Les figures 6 et 7 représentent respectivement les processeurs d'entrée et de sortie réalisés au moyen de circuits microprogrammables intégrant les fonctions de calcul d'activité et d'apprentissage. Ces circuits sont commandés respectivement par des modules de microprogrammes spécifiques exécutables par le microséquenceur MS.

Le circuit de la figure 6 représente plus précisément le chemin de données d'un processeur d'entrée PE. Un premier sélecteur bidirectionnel SEL1 est relié aux lignes de données DT. Les sorties du sélecteurs SEL1 sont reliées respectivement à deux bancs de registres RA et RB dont les sorties sont reliées à un second sélecteur SEL2. Les deux sorties du second sélecteur SEL2 sont appliquées à l'entrée d'une unité arithmétique et logique ALU dont la sortie est reliée à un troisième sélecteur SEL3 par l'intermédiaire d'un registre. Le sélecteur SEL3 présente une première sortie reliée au bus b et une seconde sortie reliée à une seconde entrée du premier sélecteur SEL1. Une troisième entrée du second sélecteur SEL2 est reliée au bus b.

L'unité arithmétique et logique ALU est munie des opérateurs classiques d'addition, de multiplication, de décalage et de seuillage de façon à pouvoir réaliser les calculs d'activités et de modifications des coefficients. On pourra facilement vérifier que la structure présentée permet au circuit d'effectuer les opérations de calcul d'activités et de mises à jour des coefficients par un simple séquencement approprié des commandes appliquées aux sélecteurs, aux bancs de registres et à l'unité arithmétique et logique. Pour faciliter la vérification, les différents signaux concernés par le processeur d'entrée ont été représentés en relation avec les liaisons où ces signaux apparaissent.

Le processeur de sortie représenté à la figure 7 est constitué des mêmes éléments. Les seules différences par rapport au processeur d'entrée sont l'absence d'une liaison entre le troisième sélecteur SEL3 et le bus b et les signaux impliqués. Comme précédemment, un séquencement approprié des composants du processeur permet de réaliser les fonctions de calcul des activités et des coefficients.

Nous allons maintenant expliquer en détail comment le système qui vient d'être décrit peut être utilisé et éventuellement adapté au traitement d'images. Le premier traitement à considérer est évidemment celui de l'analyse d'images destinée à fournir des informations synthétiques, voire abstraites en fonction des pixels constituant l'image à analyser. Un autre traitement est le complémentaire du précédent, c'est-à-dire la synthèse d'une image faite à partir d'informations synthétiques de même nature que celles élaborées par l'analyse. Enfin, à partir d'un système d'analyse et d'un système de synthèse, il est possible de réaliser un système de codage et de décodage d'images pouvant s'appliquer avantageusement à un système de transmission présentant un haut degré de compression.

En se reportant à nouveau à la figure 1, la mémoire principale MMU sera utilisée pour mémoriser l'ensemble des pixels de l'image selon un découpage approprié. Les opérateurs HOP1 du premier niveau H1 sont alors prévus pour effectuer les premiers traitements des signaux d'images. Dans le cas où le système doit effectuer un codage en vue d'une resynthèse de l'image de départ destinée à l'oeil humain, il est judicieux de choisir comme opérateurs du premier niveau des filtres prédéfinis et adaptés à la vision humaine. Avantageusement, ces filtres seront choisis de façon à simuler les filtres biologiques du système visuel humain, tels que ceux qui ont fait l'objet de nombreuses études et publications.

Ainsi, l'article "The Laplacian Pyramid as a Compact Image Code", PETER J. BURT & Al (IEEE Transactions on Communications, Vol. Com-31, N° 4, Avril 1983 - Pages 532 à 540) décrit l'utilisation de fonctions gaussiennes et laplaciennes selon une organisation multi-échelles permettant de coder une image par renforcement des zones lumineuses et des contours. L'article "Representation issues and local filter models of two-dimensional spatial visual encoding", J.G. DAUGMAN (Models of the Visual Cortex, D. Rose and V.G. Dobson, 1985 John Wiley & Sons Ltd - Pages 096 à 107) décrit l'utilisation de filtres de GABOR généralisés à deux dimensions permettant de renforcer des zones de l'image dans des directions privilégiées. Enfin, l'article "Spatiotemporal Mechanisms in Receptive Fields of Visual Cortical Simple Cells : A Model", FLORENTION WÖRGÖTTER and GARY HOLT (Journal of Neurophysiology, Vol. 65, N° 3, March 1991 - Pages 1 à 16) décrit des filtres spatio-temporels permettant de renforcer les parties de l'image présentant des variations brusques dans le temps et vers lesquelles l'oeil humain est particulièrement attiré.

L'analyse du premier niveau peut bien entendu être complétée par d'autres familles de filtres tels que ceux sensibles à la couleur, à la texture, aux courbures, etc.

Sans entrer dans les détails qui sont exposés dans les références citées ci-dessus, on peut rappeler que les filtres multi-échelles effectuent d'abord des convolutions spatiales et éventuellement temporelles d'une fonction génératrice du filtre (gaussienne, laplacienne) par les pixels appartenant à un sous-ensemble de l'image. Cette convolution s'applique en parallèle sur la totalité des sous-ensembles constituant l'image. Les résultats obtenus forment ce que l'on peut appeler des "hyperpixels" qui constituent une représentation condensée de l'image initiale. Cette représentation peut être interprétée comme une image à une échelle réduite. Les hyperpixels ainsi obtenus sont à nouveau regroupés en sous-ensembles, chaque sous-ensemble subissant une nouvelle convolution par la fonction génératrice de façon à définir un nouvel ensemble d'hyperpixels correspondant à une nouvelle représentation de l'image réduite à une deuxième échelle. Ces opérations pourront être répétées autant de fois que nécessaire de façon à ce que le nombre d'hyperpixels de la dernière échelle soit convenablement réduit pour permettre un traitement par le deuxième niveau. En appliquant ce procédé pour chacune des fonctions génératrices des différents types de filtres, on obtient plusieurs représentations condensées et complémentaires de l'image de départ, et ce sont ces différentes représentations qui vont définir les différentes couches des opérateurs du premier niveau.

Ainsi, chaque couche réalise une décomposition de l'image initiale selon une base fonctionnelle permettant une reconstruction par une succession de cumuls de la façon décrite dans le premier article cité en référence.

Lorsque le système effectue une analyse d'une image, chaque couche fournit en sortie un ensemble d'activités dont la dimension est fonction du nombre de pixels de l'image et du rapport et du nombre d'échelles utilisées dans les filtres du premier niveau. En vue d'effectuer des regroupements de l'image par zone homogène, l'unité de contrôle effectue périodiquement des regroupements par classes correspondant à des plages adjacentes de valeurs d'activités. Chaque classe est associée à une valeur représentative des activités appartenant à la classe, par exemple en effectuant la moyenne des activités de la classe. Ces valeurs représentatives sont alors ordonnées dans l'ordre décroissant de leurs valeurs puis mémorisées dans l'espace mémoire associé à l'opérateur à une adresse qui est l'unique adresse d'activité d'entrée de l'opérateur du second niveau de la même couche. La même opération est effectuée pour chacune des couches du premier niveau.

Etant donné que chaque opérateur du second niveau reçoit toujours ses activités d'entrée en fonction de l'adresse d'activité définie précédemment, le fonctionnement du second niveau est rendu pratiquement stable à l'égard des déplacements des zones homogènes de l'image. Bien entendu, cette stabilité sera conservée tant que les mêmes zones se retrouvent dans les images successives présentées à l'entrée du système.

En supposant que la condition précédente soit observée, les valeurs des coefficients des opérateurs du second niveau vont se stabiliser. Ces coefficients seront chacun représentatifs d'une zone homogène correspondante. Un tel mécanisme devra être utilisé lors de phases d'apprentissage avant d'effectuer des opérations de synthèse.

On peut remarquer que l'apprentissage des coefficients est amélioré grâce à la corrélation entre les activités des différentes couches, c'est-à-dire grâce à l'utilisation des opérateurs d'entrée et de sortie permettant cette corrélation.

L'application du système pour effectuer des reconnaissances de formes consistera donc à présenter à l'entrée du système des images contenant les formes que l'on souhaite pouvoir reconnaître et à mémoriser dans l'unité de contrôle les différents profils des vecteurs de coefficients des opérateurs correspondant à ces différentes formes. Dans l'unité de contrôle, chaque profil pourra alors être associé à des codes permettant d'identifier et de faire connaître à l'utilisateur les formes reconnues par le système.

L'utilisation du système en synthétiseur d'images consiste à prendre comme valeur représentative d'une classe d'activités des valeurs particulières correspondant aux valeurs que les coefficients prennent lorsque les zones à synthétiser sont contenues dans les images servant à l'apprentissage.

Le système peut être utilisé également pour réaliser un codage d'images en associant les fonctions d'analyse et de synthèse permises par le système. Cette association permettra en effet de vérifier à chaque niveau d'analyse la conformité de la synthèse et donc de déterminer jusqu'à quel niveau celle-ci est satisfaisante.

Le système de codage précédent permettra donc de réaliser un système de transmission à haut degré de compression en prévoyant au niveau de l'émetteur un système d'analyse et de synthèse et au niveau du récepteur un système de synthèse. La phase d'apprentissage du système d'analyse aura pour effet de fixer les valeurs de coefficients des opérateurs et ces valeurs seront transmises au système de synthèse. En fonctionnement normal, l'émetteur fonctionne en analyseur et transmet au récepteur les valeurs d'activités correspondant aux images analysées. Les valeurs d'activités transmises seront en priorité celles des opérateurs de plus haut niveau puis, en fonction de la qualité recherchée, celles des niveaux inférieurs. Au niveau du récepteur, l'activité reçue d'un opérateur d'une couche donnée permettra de reconstituer les activités des opérateurs de niveaux inférieurs en prenant comme activité les valeurs des coefficients des opérateurs dont l'activité associée reçue est forte.

Pour des raisons de simplicité, les explications précédentes ne concernaient que les deux premiers niveaux mais on pourra facilement généraliser le principe de fonctionnement aux niveaux supérieurs. Ainsi, le troisième niveau permettra de coder des objets et le quatrième niveau des prototypes d'objets.

Dans la perspective d'une application pour un système de télévision qui implique à la fois des analyses, des transmissions et des synthèses d'images et de sons, le même système pourra être utilisé en prévoyant des couches d'opérateurs spécialisés dans l'analyse et la synthèse du son.

## Revendications

1. Système de traitement de signaux comportant un réseau d'opérateurs neuronaux (OPvr) piloté par une unité de contrôle (1), chaque opérateur neuronal (OPv_{c}r) étant conçu pour effectuer une fonction multilinéaire portant sur au moins un vecteur d'entrée ([F(Ivr)]) constitué de plusieurs variables d'entrée, ladite fonction définissant une activité (Fv_{c}r) dudit opérateur (OPv_{c}r), lesdites variables d'entrée étant représentatives de signaux d'entrée du système ou d'activités d'autres opérateurs du réseau, ledit système comportant des moyens de mémorisation (MU1, ..., MU4) adressables par ladite unité de contrôle (1) et organisés en une pluralité d'espaces mémoires associés respectivement auxdits opérateurs (OPvr), ledit système étant caractérisé en ce que chaque espace mémoire contient à une adresse donnée, appelée adresse d'activité (Ivr), une valeur représentative de l'activité (Fvr_{c}) de l'opérateur associé (OPvr_{c}) et en ce que, pour un sous-ensemble au moins des autres opérateurs du réseau, lesdits espaces mémoires associés contiennent également les adresses (Ivr) des activités qui constituent les vecteurs d'entrée ([F(Ivr)]) des opérateurs (OPvr_{c}) dudit sous-ensemble.

2. Système selon la revendication 1, caractérisé en ce que ledit réseau est organisé en plusieurs niveaux (H1, ..., H4), chaque niveau (Hv) comportant un groupe (HOPv) d'opérateurs (OPvr), au moins un module de mémoire (MUv) affecté aux espaces mémoires des opérateurs dudit groupe et au moins un premier bus de communication (Bv) reliant lesdits opérateurs (OPvr) audit module de mémoire et en ce que ledit réseau comprend des liaisons (BL1, ..., BL4) permettant la communication entre l'unité de contrôle (1) et chacun desdits premiers bus de communication (B1, ..., B4).

3. Système selon la revendication 2, caractérisé en ce que chaque niveau (Hv) comprend des moyens d'adressage (BCv, CUv) capables d'adresser les activités ([F(Ivr)]) des opérateurs (OPvr) des autres niveaux après lecture des adresses d'activité (Ivr) contenues dans le module mémoire( (MUv) dudit niveau.

4. Système selon l'une des revendications 2 ou 3, caractérisé en ce que ladite fonction multilinéaire est le produit scalaire dudit vecteur d'entrée ([F(Ivr)]), soit par un vecteur de coefficients ([Gvr_{c}]) associé audit opérateur (OPvr_{c}), soit par un autre vecteur d'entrée.

5. Système selon la revendication 4, caractérisé en ce que les opérateurs (OPvr) dudit sous-ensemble et appartenant au même niveau (Hv) sont reliés entre eux, en ce que chacun desdits opérateurs (OPv_{c}r_{c}) prévus pour effectuer le produit scalaire d'un vecteur d'entrée par un vecteur de coefficients comporte des moyens d'apprentissage (AE, AS) pour corriger ledit vecteur de coefficients ([Gvr_{c}]) en fonction de son vecteur d'entrée ([F(Ivr_{c})]) et des activités ([fv_{c}r]) des autres opérateurs (OPv_{c}r) du même niveau.

6. Système selon la revendication 5, caractérisé en ce que des opérateurs dudit sous-ensemble sont constitués d'un processeur d'entrée (PE) et d'un processeur de sortie (PS), en ce que ledit processeur d'entrée (PE) est relié en entrée au premier bus de communication pour calculer son activité définie comme le produit scalaire (fv_{c}r_{c}) d'un vecteur de coefficients ([Gvr_{c}]) par un premier vecteur d'activité ([F(Ivr_{c})]) formé des activités d'opérateurs de sortie d'autres niveaux et transmettre ledit produit scalaire à un second bus de communication (b), et en ce que ledit processeur de sortie (PS) est relié en entrée au dit second bus de communication (b) pour calculer son activité définie comme le produit scalaire (Fv_{c}r_{c}) d'un vecteur de coefficients ([gvr_{c}]) par un second vecteur d'activité ([fv_{c}r]) formé des activités d'autres processeurs d'entrée (PE) du même niveau et transmettre ladite somme au premier bus.

7. Système selon la revendication 6, caractérisé en ce que l'apprentissage d'un processeur d'entrée (PE) consiste à provoquer une correction ([dGvr_{c}]) de son vecteur de coefficients ([Gvr_{c}]) lorsque l'activité (Fv_{c}r) d'au moins un processeur de sortie (PS) du même niveau dépasse un seuil déterminé, ladite correction étant proportionnelle audit premier vecteur d'activité ([F(IVr_{c})]).

8. Système selon la revendication 7, caractérisé en ce que l'apprentissage d'un processeur de sortie (PS) consiste pour chaque composante d'activité (fv_{c}r) dudit second vecteur d'activité ([fv_{c}r]) à définir une composante du vecteur de coefficient comme la probabilité conditionnelle pour que ladite composante d'activité (fv_{c}r) et l'activité (Fv_{c}r_{c}) dudit processeur de sortie dépassent simultanément chacune un seuil prédéterminé.

9. Système selon la revendication 8, caractérisé en ce que lesdits moyens d'apprentissage sont des microprogrammes d'apprentissage commandant le fonctionnement desdits processeurs d'entrée et de sortie.

10. Système d'analyse d'images utilisant le système de traitement selon l'une des revendications 5 à 9, caractérisé en ce que lesdits signaux d'entrée du système sont des signaux représentatifs d'une image appliqués à l'entrée des opérateurs du premier niveau (H1), en ce que les opérateurs du second niveau (H2) sont associés à des espaces mémoires contenant les adresses d'activités d'opérateurs du premier niveau (H1),
et en ce que l'unité de contrôle (1) active les différents niveaux successivement dans l'ordre croissant des niveaux,
lesdits moyens d'apprentissage étant activés au cours d'un processus d'apprentissage précédant une analyse dont le résultat est représentable par les valeurs des coefficients des opérateurs de l'un quelconque des niveaux supérieurs à un.

11. Système selon la revendication 10, caractérisé en ce que chaque niveau (Hv) est subdivisé en plusieurs couches, chaque couche étant représentée par un opérateur associé,
en ce que chaque opérateur (OP1r) du premier niveau (H1) d'une couche est formé d'un ensemble de filtres de même type traitant l'ensemble des signaux d'image, chaque filtre effectuant un traitement des signaux d'image représentatifs d'un sous-ensemble de l'image,
en ce que pour chaque ensemble de filtres d'une même couche, l'unité de contrôle est prévue pour effectuer périodiquement des regroupements par classes des filtres, lesdites classes correspondant à des plages adjacentes de valeurs de sortie des filtres, chaque classe étant associée à une valeur représentative desdites valeurs de sortie, lesdites valeurs représentatives étant ordonnées dans l'ordre décroissant de leurs valeurs puis mémorisées dans l'espace mémoire à une adresse qui est l'adresse d'activité de l'opérateur du second niveau de la même couche.

12. Système selon la revendication 11, caractérisé en ce que les filtres de couches différentes sont de types différents pour effectuer des traitements complémentaires prédéfinis.

13. Système selon la revendication 12, caractérisé en ce que les différents types de filtres simulent les filtres biologiques du système visuel humain.

14. Système de synthèse d'image caractérisé en ce qu'il comporte un système d'analyse selon l'une des revendications 10 à 13, utilisé pendant une phase d'apprentissage précédant une synthèse, ladite synthèse consistant ensuite à effectuer une reconstruction des images en fonction des valeurs des coefficients (Gvr_{c}) d'opérateurs sélectionnés.

## Patentansprüche

1. System zur Verarbeitung von Signalen mit einem Netz neuronaler Operatoren (OPvr), gesteuert durch eine Steuereinheit (1), wobei jeder neuronale Operator (OPv_{c}r) dazu gedacht ist, eine multilineare Funktion auf wenigstens einem Eingangsvektor ([F(Ivr)]) aus mehreren Eingangsvariablen zu bearbeiten, wobei die Funktion eine Aktivität (Fv_{c}r) des Operators (OPv_{c}r) definiert, die Eingangsvariablen Eingangssignale des Systems oder Aktivitäten anderer Operatoren des Netzes darstellen, wobei das System Vorrichtungen zum Abspeichern (MU1, ... MU4), die adressierbar sind durch die Steuereinheit (1) und organisiert sind als mehrere Speicherräume, die jeweils mit den Operatoren (OPvr) zusammenhängen, umfaßt, wobei das System dadurch gekennzeichnet ist, daß jeder Speicherraum an einer gegebenen Adresse, genannt Aktivitätsadresse (Ivr) einen Wert, der die Aktivität (Evr_{c}) des dazugehörigen Operators (OPvr_{c}) darstellt, enthält, und dadurch, daß für eine Untergruppe wenigstens anderer Operatoren des Netzes die dazugehörigen Speicherräume gleichermaßen die Adressen (Ivr) von Aktivitäten enthalten, die die Eingangsvektoren ([R(Ivr)]) der Operatoren (OPvr_{c}) der Untergruppe bilden.

2. System nach Anspruch 1, dadurch gekennzeichnet, daß das Netz aufgeteilt ist in mehrere Ebenen (H1, ... H4), wobei jede Ebene (Hv) eine Gruppe (HOPv) von Operatoren (OPvr), wenigstens ein Speichermodul (MUv), das den Speicherräumen der Operatoren der Gruppe zugeordnet ist, und wenigstens einen ersten Kommunikationsbus (Bv) umfaßt, der die Operatoren (OPvr) mit dem Speichermodul verbindet, und dadurch, daß das Netz Verbindungen (BL1, ... BL4) umfaßt, die die Kommunikation zwischen Steuereinheit (1) und jedem der ersten Kommunikationsbusse (B1, ... B4) ermöglicht.

3. System nach Anspruch 2, dadurch gekennzeichnet, daß jede Ebene (Hv) Adressierungsmittel (BCv, CUv) umfaßt, die sich zum Adressieren der Aktivitäten ([F(Ivr)]) von Operatoren (OPvr) anderer Ebenen nach dem Lesen von Aktivitätsadressen (Ivr) in dem Speichermodul (MUv) der Ebene eignen.

4. System nach einem der Ansprüche 2 oder 3, dadurch gekennzeichnet, daß die multilineare Funktion das Skalarprodukt des Eingangsvektors ([F(Ivr)]) entweder mit einem Koeffizientenvektor ([Gvr_{c}]), der zu dem Operator (OPvr_{c}) gehört, oder mit einem anderen Eingangsvektor ist.

5. System nach Anspruch 4, dadurch gekennzeichnet, daß die Operatoren (OPvr) der Untergruppe, die auch zu derselben Ebene (Hv) gehören, miteinander verbunden sind, daß jeder der Operatoren (OPv_{c}r_{c}) zur Bildung des Skalarproduktes eines Eingangsvektors mit einem Koeffizientenvektor Trainingsmittel (AE, AS) zum Korrigieren des Koeffizientenvektors ([Gvr_{c}]) in Abhängigkeit von seinem Eingangsvektor ([F(Ivr_{c})]) und von Aktivitäten ([fv_{c}r]) anderer Operatoren (OPv_{c}r) der gleichen Ebene umfaßt.

6. System nach Anspruch 5, dadurch gekennzeichnet, daß die Operatoren der Untergruppe aus einem Eingangsprozessor (PE) und einem Ausgangsprozessor (PS) bestehen, daß der Eingangsprozessor (PE) zum Berechnen seiner Aktivität, die definiert ist als das Skalarprodukt (fv_{c}r_{c}) eines Koeffizientenvektors ([Gvr_{c}]) mit einem ersten Aktivitätsvektor ([F(Ivr_{c})]), der gebildet ist aus Aktivitäten von Ausgangsoperatoren anderer Ebenen, und zum Übertragen dieses Skalarproduktes an einen zweiten Kommunikationsbus (b) über den Eingang mit dem ersten Kommunikationsbus verbunden ist, und dadurch, daß der Ausgangsprozessor (PS) zum Berechnen seiner Aktivität, die definiert ist als das Skalarprodukt (Fv_{c}r_{c}) eines Koeffizientenvektors ([gvr_{c}]) mit einem zweiten Aktivitätsvektor ([fv_{c}r]), der gebildet ist aus Aktivitäten anderer Eingangsprozessoren (PE) der gleichen Ebene, und zum Übertragen dieser Summe an den ersten Bus über seinen Eingang mit dem zweiten Kommunikationsbus (b) verbunden ist.

7. System nach Anspruch 6, dadurch gekennzeichnet, daß das Training eines Eingangsprozessors (PE) darin besteht, eine Korrektur ([dGvr_{c}]) seines Koeffizientenvektors ([Gvr_{c}]) auszulösen, wenn die Aktivität (Fv_{c}r) wenigstens eines Ausgangsprozessors (PS) der gleichen Ebene eine vorgegebene Schwelle überschreitet, wobei die Korrektur proportional zu dem ersten Aktivitätsvektor ([F(Ivr_{c})]) ist.

8. System nach Anspruch 7, dadurch gekennzeichnet, daß das Training eines Ausgangsprozessors (PS) darin besteht, bei jeder Aktivitätskomponente (fv_{c}r) des zweiten Aktivitätsvektors ([fv_{c}r]) eine Komponente des Koeffizientenvektors als bedingte Wahrscheinlichkeit zu definieren, damit die Aktivitätskomponente (fv_{c}r) und die Aktivität (Fv_{c}r_{c}) des Ausgangsprozessors gleichzeitig zusammen eine vorgegebene Schwelle überschreiten.

9. System nach Anspruch 8, dadurch gekennzeichnet, daß die Trainingsmittel Trainingsmikroprogramme sind, die die Funktion der Eingangs- und Ausgangsprozessoren steuern.

10. System zur Analyse von Bildern, das das System zur Verarbeitung nach einem der Ansprüche 5 bis 9 verwendet,
dadurch gekennzeichnet, daß die Eingangssignale des Systems Signale sind, die ein Bild darstellen, das am Eingang von Operatoren der ersten Ebene (H1) angelegt wird, daß die Operatoren der zweiten Ebene (H2) mit Speicherräumen zusammenhängen, die die Aktivitätsadressen von Operatoren der ersten Ebene (H1) enthalten, und dadurch, daß die Steuereinheit (1) die unterschiedlichen Ebenen nacheinander in steigender Ordnung der Ebenen aktiviert,
wobei die Trainingsmittel im Verlauf eines Trainingsprozesses vor einer Analyse aktiviert werden, deren Resultat darstellbar ist durch Werte von Koeffizienten von Operatoren von irgendeiner der Ebenen oberhalb von eins.

11. System nach Anspruch 10, dadurch gekennzeichnet, daß jede Ebene (Hv) in mehrere Schichten unterteilt ist, wobei jede Schicht durch einen dazugehörigen Operator dargestellt wird,
dadurch gekennzeichnet, daß der Operator (OP1r) der ersten Ebene (H1) einer Schicht aus einer Gruppe von Filtern vom gleichen Typ gebildet wird, die die Gruppe von Bildsignalen verarbeiten, wobei jeder Filter eine Verarbeitung von Bildsignalen durchführt, die eine Untergruppe von dem Bild darstellen,
und dadurch, daß für jede Gruppe von Filtern einer gleichen Schicht die Steuereinheit vorgesehen ist, um periodisch neue Gruppierungen in Klassen von Filtern durchzuführen, wobei die Klassen nebeneinanderliegenden Wertebereichen am Ausgang von Filtern entsprechen, wobei jede Klasse zu einem Wert gehört, der die Ausgangswerte darstellt, wobei die darstellenden Werte in der abfallenden Folge ihrer Werte geordnet sind, dann abgespeichert werden in dem Speicherraum an einer Adresse, die die Adresse der Aktivität des Operators der zweiten Ebene derselben Schicht ist.

12. System nach Anspruch 11, dadurch gekennzeichnet, daß die Filter unterschiedlicher Schichten von unterschiedlichem Typ sind, um vordefinierte komplementäre Verarbeitungen durchzuführen.

13. System nach Anspruch 12, dadurch gekennzeichnet, daß die unterschiedlichen Filtertypen den biologischen Filtern des menschlichen Sehbereichs entsprechen.

14. System zur Synthese von Bildern, dadurch gekennzeichnet, daß es ein Analysesystem nach einem der Ansprüche 10 bis 13 umfaßt, das verwendet wird während einer Trainingsphase vor einer Synthese, wobei die Synthese darin besteht, nachfolgend einen Neuaufbau von Bildern in Abhängigkeit von Werten von Koeffizienten (Gvr_{c}) ausgewählter Operatoren durchzuführen.

## Claims

1. A signal processing system consisting of a network of neural operators (OPvr) driven by a control unit (1), each neural operator (OPv_{c}r) being designed to perform a multi-linear function relating to at least one input vector ([F(Ivr)]) made up of several input variables, said function defining an activity (Fv_{c}r) of said operator (OPv_{c}r), said input variables being representative of input signals of the system or activities of other network operators, said system having storage means (MU1, ..., MU4) which can be addressed by said control unit (1) and organised in a plurality of storage areas associated respectively with said operators (OPvr), said system being characterised in that each storage area contains at a given address, referred to as activity address (Ivr), a value representative of the activity (Fvr_{c}) of the associated operator (OPv_{c}r) and in that for at least one sub-set of the other network operators said associated storage spaces also contain the addresses (Ivr) of the activities making up the input vectors ([F(Ivr)]) of the operators (OPvr_{c}) of said sub-set.

2. A system as claimed in claim 1, characterised in that said network is organised on several levels (H1, ..., H4), each level (Hv) having a group (HOPv) of operators (OPvr), at least one memory module (MUv) assigned to the storage spaces of the operators of said group and at least a first communication bus (Bv) linking said operators (OPvr) to said memory module and in that said network incorporates links (BL1, ..., BL4) allowing communication between the control unit (1) and each of said first communication buses (B1, ..., B4).

3. A system as claimed in claim 2, characterised in that each level (Hv) has addressing means (BCv, CUv) capable of addressing the activities ([F(Ivr)]) of the operators (OPvr) of the other levels after reading the activity addresses (Ivr) contained in the memory module (MUv) of said level.

4. A system as claimed in one of claims 2 or 3, characterised in that said multi-linear function is the scalar product of said input vector (F(Ivr)]), either by vector of coefficients ([Gvr_{c}]) associated with said operator (OPvr_{c}), or by another input vector.

5. A system as claimed in claim 4, characterised in that the operators (OPvr) of said sub-set and belonging to the same level (Hv) are linked to one another, and each of said operators (OPv_{c}r_{c}) provided as a means of producing the scalar product of an input vector by a vector of coefficients has learning means (AE, AS) to correct said vector of coefficients ([Gvr_{c}]) as a function of its input vector ([F(Ivr_{c})]) and the activities of the other operators (OPv_{c}r) of the same level.

6. A system as claimed in claim 5, characterised in that the operators of the sub-set consist of an input processor (PE) and an output processor (PS), said input processor (PE) is linked at the input to the first communication bus in order to calculate its activity defined as the scalar product (fv_{c}r_{c}) of a vector of coefficients ([Gvr_{c}]) by a first activity vector ([F(Ivr_{c})]) formed by the activities of output operators of other levels and transmit said scalar product to a second communication bus (b) and said output processor (PS) is linked at the input to said second communication bus (b) in order to calculate its activity defined as the scalar product ((Fv_{c}r_{c}) of a vector of coefficients ([gvr_{c}]) by a second activity vector ([fv_{c}r]) formed by the activities of other input processors (PE) of the same level and transmit said sum to the first bus.

7. A system as claimed in claim 6, characterised in that the learning of an input processor (PE) consists in causing a correction ([dGvr_{c}]) of its vector of coefficients ([Gvr_{c}]) when the activity (Fv_{c}r) of at least one output processor (PS) of the same level exceeds a given threshold, said correction being proportional to said first activity vector ([F(Ivr_{c})]).

8. A system as claimed in claim 7, characterised in that the learning of an output processor (PS) consists in defining for each activity component (fv_{c}r) of said second activity vector ([fv_{c}r]) a component of the coefficient vector such as the conditional probability of said activity component (fv_{c}r) and the activity (Fv_{c}r_{c}) of said output processor each exceeding a predetermined threshold simultaneously.

9. A system as claimed in claim 8, characterised in that said learning means are learning micro-programmes controlling operation of said input and output processors.

10. A system of analysing images using the processing system claimed in one of claims 5 to 9, characterised in that said input signals of the system are signals representative of an image applied to the input of operators of the first level (H1), the operators of the second level (H2) are associated with storage spaces containing the activity addresses of operators of the first level (H1),
and in that the control unit (1) activates the different levels successively in ascending order of levels,
said learning means being activated during a learning process preceding an analysis whose result can be represented by the values of the coefficients of the operators of any one of the levels higher than one.

11. A system as claimed in claim 10, characterised in that each level (Hv) is sub-divided into several layers, each layer being represented by an associated operator, each operator (OP1r) of the first level (H1) of a layer is made up of a set of filters of the same type which process the set of image signals, each filter processing the image signals representative of a sub-set of the image,
for each set of filters of a same layer, the control unit is set up to run re-groupings periodically by class of filter, said classes corresponding to adjacent ranges of output values of the filters, each class being associated with a value representative of said output values, said representative values being arranged in descending order of their values then stored in the storage space at an address which is the activity address of the operator of the second level of the same layer.

12. A system as claimed in claim 11, characterised in that the filters of different layers are of different types in order to run pre-defined complementary processing.

13. A system as claimed in claim 12, characterised in that the different types of filter simulate the biological filters of the human visual system.

14. A system of synthesising an image, characterised in that it has an analysis system as claimed in one of claims 10 to 13, used during a learning phase preceding a synthesis, said synthesis then consisting in running a reconstruction of the images as a function of the values of the coefficients (Gvr_{c}) of the selected operators.
